# EUROPEAN PATENT APPLICATION

(11) **EP 4 506 681 A1**
(43) Date of publication of application: **12.02.2025**
(21) Application number: 23784657.1
(22) Date of filing: 27.03.2023
(51) Int. Cl.: G01N 21/64

(54) **METHOD FOR DETERMINING OUTER MEMBRANE DETACHMENT IN CYANOBACTERIUM, DEVICE FOR DETERMINING OUTER MEMBRANE DETACHMENT IN CYANOBACTERIUM, AND PROGRAM**

(30) Priority: 08.04.2022 US 202263328833 P; 22.07.2022 JP 2022117053
(71) Applicant: Panasonic Intellectual Property Management Co., Ltd., Kadoma-shi, Osaka 571-0057 (JP)
(72) Inventor: KUSAMA Shoko, Kadoma-shi, Osaka 571-0057 (JP); KOJIMA Seiji, Kadoma-shi, Osaka 571-0057 (JP)
(74) Representative: Grünecker Patent- und Rechtsanwälte PartG mbB
(86) International application number: PCT/JP2023/012104
(87) International publication number: WO 2023/195367

(57) **Abstract**

A method for determining outer membrane detachment in cyanobacteria includes a measurement step (S01) of measuring fluorescence upon irradiation of a culture supernatant of cyanobacteria with excitation light and a determination step (S02) of determining, based on a wavelength range of the measured fluorescence, whether or not outer membranes of the cyanobacteria have been detached from cell walls.

## Description

### Technical Field

The present disclosure relates to a method for determining outer membrane detachment in cyanobacteria, an apparatus for determining outer membrane detachment in cyanobacteria, and a program.

### Background Art

Photosynthetic microorganisms such as cyanobacteria and algae have attracted attention as a tool for achieving a next-generation substance production system with low environmental load. The substance production by photosynthetic microorganisms is performed in an environment at ordinary temperature and pressure and performed using light as an energy source and utilizing water and carbon dioxide (CO₂) in the air. Furthermore, recent advances in genetic engineering techniques have enabled production of a wide range of compounds using genetically modified photosynthetic microorganisms. Thus, the substance production by photosynthetic microorganisms is expected as a next-generation technology capable of achieving carbon neutrality.

As such a substance production by photosynthetic microorganisms, for example, there are disclosed techniques of improving productivity of substances using genetically modified strains in which genes involved in the metabolism or biosynthesis of substances of photosynthetic microorganisms are modified. These techniques improve productivity of, for example, sucrose (NPL 1), isobutanol (NPL 2), a fatty acid (NPL 3), an amino acid (NPL 4), and a protein (NPL 5).

### Citation List

### Patent Literature

PTL 1: International Publication No. 2021/100640

### Non Patent Literature

NPL 1: Daniel C Ducat et al., "Rerouting Carbon Flux To Enhance Photosynthetic Productivity", Applied and Environmental Microbiology, American Society for Microbiology, April 2012, Vol. 78, No. 8, pp. 2660-2668
NPL 2: Shota Atsumi et al., "Direct photosynthetic recycling of carbon dioxide to isobutyraldehyde", Nature Biotechnology, Nature Publishing Group, November 2009, Vol. 27, No. 12, pp. 1177-1180
NPL 3: Xinyao Liu et al., "Fatty acid production in genetically modified cyanobacteria", The Proceedings of the Natural Academy of Sciences (PNAS), National Academy of Sciences, April 2011, Vol. 108, No. 17, pp. 6899-6904
NPL 4: Arnav Deshpande et al., "Combining random mutagenesis and metabolic engineering for enhanced tryptophan production in Synechocystis sp. strain PCC 6803", Applied Environmental Microbiology, May 2020, Vol. 86, No. 9, e02816-19
NPL 5: James A. Gregory et al., "Alga-Produced Cholera Toxin-Pf s25 Fusion Proteins as Oral Vaccines", Applied and Environmental Microbiology, American Society for Microbiology, June 2013, Vol. 79, No. 13, pp. 3917-3925

### Summary of Invention

For example, a technique of improving productivity of a protein using a genetically modified strain of cyanobacteria whose outer membranes have been detached from cell walls (PTL 1) is very important in the substance production by photosynthetic microorganisms. However, the technique described in PTL 1 takes time and effort because whether or not outer membranes of cyanobacteria have been detached from cell walls needs to be determined by, for example, electron microscopic observation of cells or a complicated biochemical analytical method.

In view of the above, the present disclosure provides a method for determining outer membrane detachment in cyanobacteria, an apparatus for determining outer membrane detachment in cyanobacteria, and a program that can simply and easily determine whether or not outer membranes have been detached from cell walls.

A method for determining outer membrane detachment in cyanobacteria according to an aspect of the present disclosure includes a measurement step of measuring fluorescence upon irradiation of a culture supernatant of cyanobacteria with excitation light; and a determination step of determining, based on a wavelength range of the measured fluorescence, whether or not outer membranes of the cyanobacteria have been detached from cell walls.

An apparatus for determining outer membrane detachment in cyanobacteria according to an aspect of the present disclosure includes a measurer that measures fluorescence upon irradiation of a culture supernatant of cyanobacteria with excitation light; and a determiner that determines, based on a wavelength range of the fluorescence measured by the measurer, whether or not outer membranes of the cyanobacteria have been detached from cell walls.

A program according to an aspect of the present disclosure is a program for causing a computer to execute a method for determining, based on a wavelength range of fluorescence measured upon irradiation of a culture supernatant of cyanobacteria with excitation light, whether or not outer membranes of the cyanobacteria have been detached from cell walls.

These general or specific aspects may be implemented as a system, an integrated circuit, or a computer-readable recording medium or may be implemented as a combination of any of an apparatus, a system, a method, an integrated circuit, a computer program, and a computer-readable recording medium. Examples of the computer-readable recording medium include a non-volatile recording medium such as a CD-ROM (compact disc-read only memory).

According to the method for determining outer membrane detachment in cyanobacteria, the apparatus for determining outer membrane detachment in cyanobacteria, and the program according to the present disclosure, whether or not outer membranes of cyanobacteria have been detached can be simply and easily determined.

### Brief Description of Drawings

[Fig. 1] Fig. 1 is a block diagram illustrating an example of a functional configuration of an apparatus for determining outer membrane detachment in cyanobacteria according to an embodiment.
[Fig. 2] Fig. 2 is a flowchart illustrating an example of a flow of a method for determining outer membrane detachment in cyanobacteria according to an embodiment.
[Fig. 3] Fig. 3 is a map showing the results of fluorescence measurement of a culture supernatant of an outer membrane-detached strain.
[Fig. 4] Fig. 4 is a table showing combinations of the wavelength of excitation light applied to a culture supernatant and fluorescence with a measured wavelength.
[Fig. 5] Fig. 5 is a map showing the results of fluorescence measurement of a culture supernatant of a wild-type strain.
[Fig. 6] Fig. 6 is a graph showing the results of fluorescence measurement of a culture supernatant of an outer membrane-detached strain and a culture supernatant of a wild-type strain.

### Description of Embodiments

### (Underlying Knowledge Forming Basis of the Present Disclosure)

Photosynthetic microorganisms such as cyanobacteria and algae have attracted attention as a tool for achieving a next-generation substance production system with low environmental load. In particular, in the substance production using cyanobacteria, there is a need for a method for efficiently, simply, and easily evaluating and managing the state of cyanobacterial cells and their culture.

In view of the above, the inventor of the present invention focused on cyanobacteria as photosynthetic microorganisms used for production of substances. Cyanobacteria (also referred to as "blue-green bacteria" or "blue-green algae"), which are a group of eubacteria, decompose water through photosynthesis to produce oxygen and fix CO₂ in the air with the obtained energy. Cyanobacteria can also fix nitrogen (N₂) in the air, depending on their species. Cyanobacteria are known for their fast growth and high light use efficiency, and in addition, cyanobacteria are easier to genetically manipulate than other algae species; therefore, among photosynthetic microorganisms, cyanobacteria have been actively researched and developed for their use. As described above, as examples of the substance production by cyanobacteria (more specifically, modified cyanobacteria), the production of, for example, sucrose (NPL 1), isobutanol (NPL 2), a fatty acid (NPL 3), and an amino acid (NPL 4) have been reported.

For example, NPL 1 discloses that the productivity of sucrose by a genetically modified strain of *Synechococcus elongatus* in which a gene involved in the sucrose biosynthetic pathway has been modified was improved compared with the wild-type strain.

For example, NPL 2 discloses that the productivity of isobutanol by a genetically modified strain which was obtained by genetically manipulating *Synechococcus elongatus* PCC7942 and in which ribulose 1,5-bisphosphate carboxylase/oxidase (Rubisco) was overexpressed was improved compared with the wild-type strain.

For example, NPL 3 discloses that the productivity of a fatty acid by a genetically modified strain obtained by introducing an acyl-acyl carrier protein thioesterase gene into *Synechocystis* sp. PCC6803 was improved compared with the wild-type strain.

NPL 4 discloses that the productivity of tryptophan by a tryptophan-overproducing strain isolated by subjecting *Synechocystis* sp. PCC 6803 wild-type strain to random mutagenesis and selection using an amino acid analog was improved compared with the wild-type strain.

NPL 5 discloses that a genetically modified alga obtained by genetically manipulating the chloroplast of the alga *Chlamydomonas reinhardtii* to intracellularly produce a chimeric protein (CtxB-Pfs25) consisting of the 25 kDa Plasmodium falciparum surface protein (Pfs25) fused to the β subunit of the cholera toxin (CtxB) can be used as an oral vaccine for malaria.

However, in the related art described above, even when a target substance is produced in cells of a genetically modified strain of a photosynthetic microorganism, the substance accumulates without being secreted outside the cells or is unlikely to be secreted outside the cells. Accordingly, it is necessary to disrupt the cells and collect the target substance, which takes time and effort to produce the substance. In addition, since various substances are present inside the cells, it may be necessary to remove such substances and purify the target substance, resulting in a decrease in the rate of collection of the target substance. Furthermore, each time a target substance is produced, it is necessary to prepare a new genetically modified strain, which takes time and effort and increases the production cost. Thus, with the related art described above, the production efficiency of substances by photosynthetic microorganisms is still at a low level, and it is desirable to develop a technique with higher production efficiency.

The structures of cell walls and cell membranes of cyanobacteria have low permeability to substances produced in the cells, and it is not easy to artificially modify the structures of the cell membranes and cell walls to improve the secretion production capacity for the substances. Unlike substances having a relatively low molecular weight (also referred to as a low-molecular compounds) such as amino acids, in particular, substances having a high molecular weight (also referred to as a high-molecular compounds) such as proteins are less likely to be secreted to the outside of the cells.

However, it is disclosed that deletion of slr1841 gene or slr0688 gene, which is involved in adhesion between the outer membrane and the cell wall of cyanobacteria and contributes to structural stability of the cell surface, results in loss of proliferative ability of cyanobacterial cells (NPL 6: Hikaru Kowata, Studies on molecular basis of cyanobacterial outer membrane function and its evolutionary relationship with primitive chloroplasts, doctoral thesis, [Online], 2018.03.27, Internet: <URL: http://hdl.handle.net/10097/00122689> and NPL 7: Seiji Kojima, Elucidation and application of membrane stabilization mechanism and substance permeation mechanism derived from bacteria that function in the chloroplast surface membrane, Grants-in-Aid for Scientific Research, [Online], 2018.04.23, Internet: <URL: https://kaken.nii.ac.jp/grant/KAKENHI-PROJECT-18H02117>).

As a technique for solving the above problem, PTL 1 discloses modified cyanobacteria in which the function of a protein that is involved in binding between the outer membrane and the cell wall (hereinafter, also referred to as a binding-related protein) of cyanobacteria is suppressed or lost and a method for manufacturing a protein with the modified cyanobacteria. In the technique described in PTL 1, while the modified cyanobacteria maintain proliferative ability of the cells, outer membranes of the cyanobacteria have been detached from cell walls. Therefore, culturing the cells enables the protein produced within the cells to be secreted to the outside of the cells, thereby efficiently manufacturing the protein.

However, although it is known that the detachment of the outer membranes of cyanobacteria from the cell walls improves the productivity of substances, whether or not the outer membranes have been detached needs to be determined by electron microscopic observation and a complicated biochemical analytical method, and no simple and easy method has been developed to date.

In view of the above, the inventor has conducted extensive studies on a method for simply and easily determining whether or not outer membranes have been detached from cell walls, as an evaluation indicator of whether or not the state of cyanobacterial cells is a state suitable for efficient substance production. As a result, it has been found that whether or not the outer membranes of cyanobacteria have been detached from the cell walls can be simply and easily determined based on a wavelength range of fluorescence measured upon irradiation of a culture supernatant of the cyanobacteria with excitation light.

Thus, according to the present disclosure, whether or not the outer membranes of cyanobacteria have been detached from the cell walls can be simply and easily determined based on fluorescence measurement results of a culture supernatant of the cyanobacteria. Therefore, according to the present disclosure, by determining whether or not the outer membranes of cyanobacteria have been detached from the cell walls, whether or not the cyanobacteria are those suitable for substance production can be determined, and thus it is possible to contribute to improving the productivity of substances by cyanobacteria.

### (Overview of the Present Disclosure)

An overview of one aspect of the present disclosure is as follows.

A method for determining outer membrane detachment in cyanobacteria according to an aspect of the present disclosure includes a measurement step of measuring fluorescence upon irradiation of a culture supernatant of cyanobacteria with excitation light; and a determination step of determining, based on a wavelength range of the measured fluorescence, whether or not outer membranes of the cyanobacteria have been detached from cell walls.

In this case, the method for determining outer membrane detachment in cyanobacteria can simply and easily determine, based on fluorescence measurement results of a culture supernatant of the cyanobacteria, whether or not the outer membranes of cyanobacteria have been detached from the cell walls. Therefore, according to the method for determining outer membrane detachment in cyanobacteria, by determining whether or not the outer membranes of cyanobacteria have been detached from the cell walls, whether or not the cyanobacteria are those suitable for substance production can be determined, and thus it is possible to contribute to improving the productivity of substances by cyanobacteria.

For example, in the method for determining outer membrane detachment in cyanobacteria according to an aspect of the present disclosure, in the measurement step, the fluorescence may be measured upon irradiation of the culture supernatant with the excitation light in a predetermined wavelength range, and in the determination step, it may be determined that the outer membranes of the cyanobacteria have been detached from the cell walls if the fluorescence is measured in a wavelength range corresponding to the predetermined wavelength range.

In this case, the method for determining outer membrane detachment in cyanobacteria can determine whether or not the outer membranes of cyanobacteria have been detached from the cell walls based on whether or not fluorescence in a wavelength range corresponding to a predetermined wavelength range is measured upon irradiation with excitation light in the predetermined wavelength range. Thus, according to the method for determining outer membrane detachment in cyanobacteria, outer membrane detachment in cyanobacteria can be more simply and easily determined with high accuracy.

For example, in the method for determining outer membrane detachment in cyanobacteria according to an aspect of the present disclosure, the predetermined wavelength range of the excitation light may be 620 nm ± 10 nm, and the wavelength range of the fluorescence corresponding to the predetermined wavelength range of the excitation light may be 645 nm ± 10 nm.

In this case, the method for determining outer membrane detachment in cyanobacteria can determine that the outer membranes of cyanobacteria have been detached if, upon irradiation with excitation light in the predetermined wavelength range, fluorescence in a wavelength range corresponding to the predetermined wavelength range is measured, and that the outer membranes of cyanobacteria have not been detached if the fluorescence is not measured. Thus, according to the method for determining outer membrane detachment in cyanobacteria, outer membrane detachment in cyanobacteria can be more simply and easily determined with high accuracy.

For example, in the method for determining outer membrane detachment in cyanobacteria according to an aspect of the present disclosure, in the measurement step, the fluorescence may be measured upon irradiation of the culture supernatant with the excitation light in a predetermined wavelength range, and in the determination step, it may be determined that the outer membranes of the cyanobacteria have been detached from the cell walls if an intensity of the fluorescence in a wavelength range corresponding to the predetermined wavelength range is greater than or equal to a threshold value.

In this case, the method for determining outer membrane detachment in cyanobacteria can determine that the outer membranes of cyanobacteria have been detached if, upon irradiation of excitation light in the predetermined wavelength range, an intensity of fluorescence in a wavelength range corresponding to the predetermined wavelength range is greater than or equal to a threshold value, and that the outer membranes of cyanobacteria have not been detached if the intensity of fluorescence is less than the threshold value. Thus, according to the method for determining outer membrane detachment in cyanobacteria, outer membrane detachment in cyanobacteria can be more simply and easily determined with high accuracy.

For example, in the method for determining outer membrane detachment in cyanobacteria according to an aspect of the present disclosure, in the determination step, it may be determined that the outer membranes of the cyanobacteria have been detached from the cell walls if a combination of the predetermined wavelength range of the excitation light and a wavelength range of the fluorescence corresponding to the predetermined wavelength range of the excitation light is at least one of (1) to (3) below:
(1) wavelength range of excitation light: 280 nm ± 10 nm, wavelength range of fluorescence: 335 nm ± 10 nm
(2) wavelength range of excitation light: 275 nm ± 10 nm, wavelength range of fluorescence: 450 nm ± 10 nm
(3) wavelength range of excitation light: 360 nm ± 10 nm, wavelength range of fluorescence: 455 nm ± 10 nm

In this case, the method for determining outer membrane detachment in cyanobacteria can determine that the outer membranes of cyanobacteria have been detached if, upon irradiation of excitation light in the predetermined wavelength range, an intensity of fluorescence in a wavelength range corresponding to the predetermined wavelength range is greater than or equal to a threshold value, and that the outer membranes of cyanobacteria have not been detached if the intensity of fluorescence is less than the threshold value. Thus, according to the method for determining outer membrane detachment in cyanobacteria, outer membrane detachment in cyanobacteria can be more simply and easily determined with high accuracy.

An apparatus for determining outer membrane detachment in cyanobacteria according to an aspect of the present disclosure includes a measurer that measures fluorescence upon irradiation of a culture supernatant of cyanobacteria with excitation light; and a determiner that determines, based on a wavelength range of the fluorescence measured by the measurer, whether or not outer membranes of the cyanobacteria have been detached from cell walls.

In this case, the apparatus for determining outer membrane detachment in cyanobacteria can simply and easily determine, based on fluorescence measurement results of a culture supernatant of cyanobacteria, whether or not the outer membranes of cyanobacteria have been detached from the cell walls. Therefore, according to the apparatus for determining outer membrane detachment in cyanobacteria, by determining whether or not the outer membranes of cyanobacteria have been detached from the cell walls, whether or not the cyanobacteria are those suitable for substance production can be determined, and thus it is possible to contribute to improving the productivity of substances by cyanobacteria.

A program according to an aspect of the present disclosure is a program for causing a computer to execute a method for determining, based on a wavelength range of fluorescence measured upon irradiation of a culture supernatant of cyanobacteria with excitation light, whether or not outer membranes of the cyanobacteria have been detached from cell walls.

In this case, the program causes a computer to determine, based on fluorescence measurement results of a culture supernatant of the cyanobacteria, whether or not outer membranes of the cyanobacteria have been detached from cell walls; therefore, the computer can simply and easily determine outer membrane detachment in cyanobacteria.

Hereafter, embodiments will be specifically described with reference to the drawings.

Note that all of the embodiments described below illustrate general or specific examples. The numerical values, materials, steps, the order of the steps, etc., are merely examples and are not intended to limit the scope of the present disclosure. Among the structural elements in the following embodiments, structural elements that are not recited in any of the independent claims indicating the broadest concept are described as optional structural elements.

Each drawing does not necessarily present a precise illustration. In the drawing, substantially the same components are denoted by the same reference signs, and a duplicate description may be omitted or simplified.

In the following, ranges of numerical values do not represent only strict meanings but include, for example, substantially the same ranges, for example, an amount (e.g., the number, the concentration, or the like) of a protein or measuring a range thereof.

In the present specification, a bacterial cell and a cell each represent one individual of cyanobacteria.

### (Embodiments)

### [1. Apparatus for Determining Outer Membrane Detachment in Cyanobacteria]

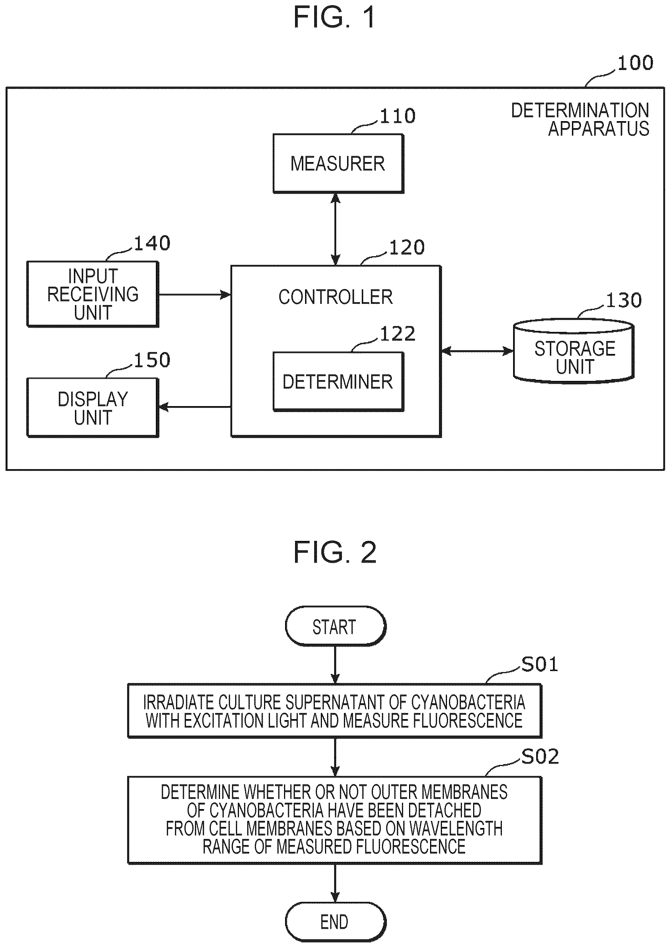

First, an apparatus for determining outer membrane detachment in cyanobacteria (hereinafter, also simply referred to as a determination apparatus) according to this embodiment will be described. Fig. 1 is a block diagram illustrating an example of a functional configuration of an apparatus for determining outer membrane detachment in cyanobacteria according to this embodiment.

As illustrated in Fig. 1, a determination apparatus 100 includes, for example, a measurer 110, a controller 120, a storage unit 130, an input receiving unit 140, and a display unit 150. The controller 120 includes, for example, a determiner 122.

The measurer 110 is, for example, a spectrofluorometer. The specific configuration of the measurer 110 is similar to that of a typical spectrofluorometer. The measurer 110, for example, irradiates a culture solution of cyanobacteria introduced in a cell for measurement with excitation light and measures fluorescence. The cell for measurement may be, for example, a spectroscopic cell or a flow cell. Such a cell may be made of quartz or an acrylic resin but is more preferably made of quartz. The flow cell may be connected through piping to a culture tank in which the cyanobacteria are cultured. The piping may be connected to the culture tank through a dilution unit and a feed unit. A culture supernatant may be sampled at predetermined intervals (for example, daily) after the start of the main culture and provided for measurement. The sampling may be performed manually by a user or automatically.

Although not illustrated, the measurer 110 includes, for example, a controller that controls the operation of the measurer 110, and the controller controls the operation of the measurer 110 in accordance with a control signal output from the controller 120 of the determination apparatus 100. In the example illustrated in Fig. 1, the determination apparatus 100 includes the measurer 110. Alternatively, the measurer 110 may be omitted. In such a case, the measurer 110 is a measurement apparatus, and the determination apparatus 100 is connected to the measurement apparatus via communication.

The controller 120 executes information processing for controlling the operation of the determination apparatus 100. The controller 120 is realized by, for example, a microcomputer but may be realized by a processor or a dedicated circuit. The controller 120 specifically includes the determiner 122. The determiner 122 is realized by a processor executing a program for executing the information processing.

The determiner 122 determines, based on a wavelength range of fluorescence measured by the measurer 110, whether or not outer membranes of the cyanobacteria have been detached from cell walls.

Note that the determination of whether or not outer membranes of cyanobacteria have been detached from cell walls may be a determination of whether or not the culture supernatant of the cyanobacteria provided for the measurement is a culture supernatant of cyanobacteria whose outer membranes have been detached from cell walls. Specific functions of the determiner 122 will be described in the next section.

The storage unit 130 is a storage device in which, for example, a control program executed by the controller 120 is stored. The storage unit 130 is realized by, for example, a semiconductor memory.

The input receiving unit 140 receives an operation input by a user. The input receiving unit 140 is specifically realized by, for example, a mouse, a microphone, or a touch panel.

The display unit 150 is a display device that displays information to be presented to the user on the basis of the control by the controller 120. The display unit 150 is realized by a liquid crystal panel or an organic EL (electro-luminescence) panel.

### [2. Method for Determining Outer Membrane Detachment in Cyanobacteria]

Next, a method for determining outer membrane detachment in cyanobacteria according to this embodiment will be described with reference to Fig. 2. Fig. 2 is a flowchart illustrating an example of a flow of the method for determining outer membrane detachment in cyanobacteria according to this embodiment.

The determination method is performed by the determination apparatus 100. For example, as illustrated in Fig. 2, the measurer 110 of the determination apparatus 100 irradiates a culture supernatant of cyanobacteria introduced in a cell for measurement with excitation light and measures fluorescence (S01). More specifically, in step S01, for example, the measurer 110 irradiates a culture supernatant with excitation light in a predetermined wavelength range and measures fluorescence. The measurer 110 may irradiate the culture supernatant with excitation light in a single predetermined wavelength range or may irradiate the culture supernatant with excitation light in two or more predetermined wavelength ranges in sequence.

Next, the determiner 122 of the determination apparatus 100 determines, based on a wavelength range of fluorescence measured by the measurer 110, whether or not outer membranes of the cyanobacteria have been detached from cell walls (S02).

In step S02, for example, the determiner 122 may determine that outer membranes of the cyanobacteria have been detached from cell walls if fluorescence is measured in a wavelength range corresponding to the predetermined wavelength range. In this case, the predetermined wavelength of the excitation light is 620 nm ± 10 nm, and the wavelength range of the fluorescence corresponding to the predetermined wavelength range of the excitation light is 645 nm ± 10 nm. For example, even when a culture supernatant of cyanobacteria whose outer membranes have not been detached from cell walls thereof is irradiated with excitation light with a wavelength of 620 nm ± 10 nm, fluorescence in the wavelength range (for example, 645 nm ± 10 nm) corresponding to the above wavelength range is not measured. In contrast, when a culture supernatant of outer membrane-detached cyanobacteria whose outer membranes have been detached from cell walls thereof is irradiated with excitation light with a wavelength of 620 nm ± 10 nm, fluorescence in the wavelength range (for example, 645 nm ± 10 nm) corresponding to the above wavelength range is measured.

In step S02, for example, the determiner 122 may determine that outer membranes of the cyanobacteria have been detached from cell walls if an intensity of fluorescence in a wavelength range corresponding to the predetermined wavelength range is greater than or equal to a threshold value. In this case, the determiner 122 may determine that outer membranes of the cyanobacteria have been detached from cell walls if a combination of the predetermined wavelength range of the excitation light and a wavelength range of the fluorescence corresponding to the predetermined wavelength range of the excitation light is at least one of (1) to (3) below.
(1) Wavelength range of excitation light: 280 nm ± 10 nm, Wavelength range of fluorescence: 335 nm ± 10 nm
(2) Wavelength range of excitation light: 275 nm ± 10 nm, Wavelength range of fluorescence: 450 nm ± 10 nm
(3) Wavelength range of excitation light: 360 nm ± 10 nm, Wavelength range of fluorescence: 455 nm ± 10 nm

For example, when a culture supernatant of cyanobacteria whose outer membranes have not been detached from cell walls thereof is irradiated with excitation light in at least one of the wavelength ranges of (1) to (3) above, fluorescence in a wavelength range corresponding to each of the wavelength ranges is measured, but the intensity of the fluorescence is less than or equal to the threshold value. When a culture supernatant of outer membrane-detached cyanobacteria whose outer membranes have been detached from cell walls thereof is irradiated with excitation light in at least one of the wavelength ranges of (1) to (3) above, fluorescence in a wavelength range corresponding to each of the wavelength ranges is measured. In this case, if the intensity of fluorescence in at least one of (1) to (3) above is greater than or equal to the threshold value, it is determined that outer membranes of the cyanobacteria have been detached from cell walls. The threshold value may be a common threshold value for fluorescence in all the wavelength ranges of (1) to (3) above, or may be set for fluorescence in each of the wavelength ranges.

### [3. Cyanobacteria]

Next, cyanobacteria will be described. Cyanobacteria, which are also called blue-green algae or blue-green bacteria, are a group of prokaryotes that perform photosynthesis while collecting light energy with chlorophyll and electrolyzing water with the obtained energy to generate oxygen. Cyanobacteria are rich in diversity, for example, regarding the cell shape, there are unicellular species such as *Synechocystis* sp. PCC 6803 and multicellular filamentous species such as *Anabaena* sp. PCC 7120. Regarding the growing environment, there are thermophilic species such as *Thermosynechococcus elongatus*, marine species such as *Synechococcus elongatus*, and freshwater species such as *Synechocystis.* In addition, there are many species that have unique characteristics, such as *Microcystis aeruginosa*, which is a species having gas vesicles and producing toxins, and *Gloeobacter violaceus*, which has a protein called phycobilisome functioning as a light-harvesting antenna on the plasma membrane without having thylakoids.

The cell surface of cyanobacteria is composed of a plasma membrane (also referred to as inner membrane), peptidoglycan, and an outer membrane, which is a lipid membrane forming the outermost layer of a cell, in this order from the inside. A sugar chain composed of glucosamine, mannosamine, and the like is covalently bound to peptidoglycan, and pyruvic acid is bound to such a covalently bound sugar chain. In the present specification, peptidoglycan and the covalently bound sugar chain are collectively referred to as a cell wall. The gap between the plasma membrane (that is, the inner membrane) and the outer membrane is called periplasm in which various enzymes involved in decomposition or formation of a three-dimensional structure of a protein, decomposition of a lipid or a nucleic acid, or taking up extracellular nutrients are present.

An SLH domain-retaining outer membrane protein (for example, Slr1841) consists of a C-terminal region embedded in a lipid membrane (also referred to as an outer membrane) and an N-terminal SLH domain protruding from the lipid membrane and is widely distributed in cyanobacteria and bacteria belonging to the *Negativicutes* class, which is a group of gram-negative bacteria. The region embedded in the lipid membrane (i.e., the outer membrane) forms channels for allowing hydrophilic substances to permeate through the outer membrane, while the SLH domain has the function of binding to the cell wall. In order for the SLH domain to bind to the cell wall, the covalently bound sugar chain in peptidoglycan needs to be modified with pyruvic acid. Examples of genes encoding the SLH domain-retaining outer membrane protein include slr1841 and slr1908 carried by *Synechocystis* sp. PCC 6803 and oprB carried by Anabaena sp. 90.

The enzyme that catalyzes the pyruvic acid modification reaction of the covalently bound sugar chain in peptidoglycan (hereinafter referred to as a cell wall-pyruvic acid modifying enzyme) has been identified in the gram-positive bacterium *Bacillus anthracis* and is named CsaB. In cyanobacteria whose genome base sequence is open to the public, many species carry a gene encoding a homologous protein having an amino acid sequence identity of greater than or equal to 30% with CsaB. Examples thereof include slr0688 carried by *Synechocystis* sp. PCC 6803 and synpcc7502_03092 carried by *Synechococcus* sp. 7502.

In cyanobacteria, CO₂ fixed by photosynthesis is converted into various amino acids through a multi-step enzymatic reaction. Proteins are synthesized in the cytoplasm of cyanobacteria using the amino acids as raw materials. Some of the proteins function within the cytoplasm, while others are transported from the cytoplasm to the periplasm and function within the periplasm. However, cases where proteins are actively secreted extracellularly have not been reported to date in cyanobacteria.

Cyanobacteria have high photosynthetic ability; therefore, it is not always necessary to take in organic substances as nutrients from the outside. For this reason, cyanobacteria have, in the outer membrane, very few channel proteins that allow organic substances to permeate, such as organic substance channel proteins (for example, Slr1270). For example, in *Synechocystis* sp. PCC 6803, the organic substance channel proteins that allow organic substances to permeate are present in an amount of only about 4% of the total protein mass of the outer membrane. On the other hand, cyanobacteria have, in the outer membrane, a large amount of ion channel proteins that allow inorganic ions to permeate, such as the SLH domain-retaining outer membrane protein (for example, Slr1841), in order to take in inorganic ions necessary for growth into the cells with high efficiency. For example, in *Synechocystis* sp. PCC 6803, the ion channel proteins that allow inorganic ions to permeate account for about 80% of the total protein mass of the outer membrane.

As described above, in cyanobacteria, there are very few channels for allowing organic substances, such as proteins in the outer membrane, to permeate; therefore, it is considered that it is difficult to actively secrete proteins produced in the bacterial cells to the outside of the bacterial cells. The structures of cell walls and cell membranes of cyanobacteria influence protein permeability, and it is not easy to artificially modify the structures of cell walls and cell membranes and improve the secretion production capacity for proteins. For example, NPL 6 and NPL 7 disclose that deletion of slr1841 gene or slr0688 gene, which is involved in adhesion between the outer membrane and the cell wall and contributes to structural stability of the cell surface, results in loss of proliferative ability of the cells.

### [4. Outer Membrane-Detached Cyanobacteria]

Next, cyanobacteria whose outer membranes have been detached from the cell walls (so-called outer membrane-detached cyanobacteria) will be described.

Cyanobacteria whose outer membranes have been detached from the cell walls (so-called outer membrane-detached cyanobacteria) may be, for example, cyanobacteria in a state where the outer membranes have been temporarily detached from the cell walls by a chemical or external force (for example, pressure, temperature, or the like) or modified cyanobacteria that have been genetically modified so that the outer membranes are detached from cell walls. Herein, the modified cyanobacteria refer to modified bacteria in which the total amount of protein involved in the binding between the outer membranes and the cell walls (so-called a binding-related protein) in cyanobacteria is reduced to greater than or equal to 30% and less than or equal to 70% of the total amount of the protein in the parent strain (so-called parent cyanobacteria). For example, the expression "the total amount of binding-related protein is reduced to 30% of the total amount of the protein in the parent strain" means a state where 70% of the total amount of the protein in the parent strain is lost, and the total amount is reduced to 30%. Thus, in the modified cyanobacteria, since the function of the protein involved in the binding between the outer membranes and the cell walls of cyanobacteria is suppressed, the binding (for example, the amount of binding and binding force) between the outer membranes and the cell walls partially decreases, so that the outer membranes are likely to be partially detached from the cell walls. As described above, for example, NPL 6 and NPL 7 disclose that deletion of slr1841 gene or slr0688 gene, which is a gene encoding a binding-related protein, results in loss of proliferative ability of the cells. In contrast, in the modified cyanobacteria in the present disclosure, since expression of a gene encoding a binding-related protein is suppressed, proliferative ability of the cells is not impaired. In the modified cyanobacteria prepared in this manner, the binding (for example, the amount of binding and binding force) between the outer membranes and the cell walls partially decreases without impairing the proliferative function of the cells, so that the outer membranes are likely to be partially detached from the cell walls. Therefore, desired chemical compound, protein, and metabolite produced in bacterial cells (in other words, in cells) (hereinafter, also referred to as substances produced in bacterial cells) of cyanobacteria are likely to leak to the outside of the outer membranes, that is, the outside of the bacterial cells. Such modified cyanobacteria do not require an extraction operation of substances produced in bacterial cells, such as disruption of bacterial cells, and thus a decrease in the physiological activity and yield of the substances produced in bacterial cells is less likely to occur. In addition, since the proliferative function of the cells of the modified cyanobacteria is not impaired, it is possible to use the modified cyanobacteria repeatedly even after the substances that are produced in the bacterial cells and secreted outside the bacterial cells are collected.

Hereinafter, a description will be given of cyanobacteria modified such that outer membranes are partially detached from the cell walls by suppressing the function of at least one binding-related protein selected from the group consisting of the SLH domain-retaining outer membrane protein and the cell wall-pyruvic acid modifying enzyme.

The type of cyanobacteria serving as parent microorganisms of modified cyanobacteria (in the present specification, referred to as "parent strain" or "parent cyanobacteria") before at least one of the expression of the SLH domain-retaining outer membrane protein and the expression of cell wall-pyruvic acid modifying enzyme is suppressed is not particularly limited and may be any type of cyanobacteria. For example, the parent cyanobacteria may be of the genus *Synechocystis,* genus *Synechococcus,* genus *Anabaena*, or genus *Thermosynechococcus.* In particular, the parent cyanobacteria may be of the *Synechocystis* sp. PCC 6803, *Synechococcus* sp. PCC 7942, or *Thermosynechococcus elongatus* BP-1. The parent strain may be a wild-type strain or a modified strain having a binding-related protein equivalent to that of the wild-type strain, as long as the parent strain is cyanobacteria before the total amount of the binding-related protein is reduced to greater than or equal to 30% and less than or equal to 70%.

The amino acid sequences of the SLH domain-retaining outer membrane protein and the enzyme that catalyzes cell wall-pyruvic acid modification reaction (so-called cell wall-pyruvic acid modifying enzyme) in the parent cyanobacteria, the base sequences of genes encoding the binding-related proteins, and the positions of the genes on chromosome DNAs or plasmids can be confirmed by NCBI (National Center for Biotechnology Information) database (https://blast.ncbi.nlm.nih.gov/Blast.cgi) and Cyanobase (http://genome.microbedb.jp/cyanobase/).

The SLH domain-retaining outer membrane protein and the cell wall-pyruvic acid modifying enzyme whose functions are suppressed in modified cyanobacteria according to this embodiment may be those of any parent cyanobacteria as long as they are possessed by the parent cyanobacteria, and they are not limited by the locations (for example, on chromosomal DNAs or plasmids) of the genes encoding them.

For example, the SLH domain-retaining outer membrane protein may be, for example, Slr1841, Slr1908, or Slr0042 when the parent cyanobacteria belong to the genus *Synechocystis;* may be, for example, NIES970_09470 when the parent cyanobacteria belong to the genus *Synechococcus;* may be, for example, Anacy_5815 or Anacy_3458 when the parent cyanobacteria belong to the genus *Anabaena;* may be, for example, A0A0F6U6F 8_MICAE when the parent cyanobacteria belong to the genus *Microcystis;* may be, for example, A0A3 B8XX12_9CYAN when the parent cyanobacteria belong to the genus *Cyanothece*; may be, for example, A0A1Q8ZE23_9CYAN when the parent cyanobacteria belong to the genus *Leptolyngbya*; may be A0A1Z4R6U0_9CYAN when the parent cyanobacteria belong to the genus *Calothrix;* may be, for example, A0A1C0VG86_9NOSO when the parent cyanobacteria belong to the genus *Nostoc;* may be, for example, B1WRN6_CROS5 when the parent cyanobacteria belong to the genus *Crocosphaera;* and may be, for example, K9TAE4_9CYAN when the parent cyanobacteria belong to the genus *Pleurocapsa.*

More specifically, the SLH domain-retaining outer membrane protein may be, for example, Slr1841 of *Synechocystis* sp. PCC 6803, NIES970_0 9470 of *Synechococcus* sp. NIES-970, or Anacy_3458 of *Anabaena cylindrica* PCC 7122. Alternatively, it may be a protein whose amino acid sequence has greater than or equal to 50% identity to the amino acid sequence of any of the SLH domain-retaining outer membrane proteins.

In general, it is said that if greater than or equal to 30% of the amino acid sequence of a protein is identical, the protein has a high homology of the three-dimensional structure, and thus there is a high possibility that the protein has a function equivalent to that of the corresponding protein. Accordingly, the SLH domain-retaining outer membrane protein whose function is suppressed may be a protein or polypeptide that has the function of binding to a covalently bound sugar chain of a cell wall and that is composed of an amino acid sequence having greater than or equal to 40%, preferably greater than or equal to 50%, more preferably greater than or equal to 60%, still more preferably greater than or equal to 70%, still further more preferably greater than or equal to 80%, yet still further more preferably greater than or equal to 90% identity to the amino acid sequence of any of the foregoing SLH domain-retaining outer membrane proteins.

For example, the cell wall-pyruvic acid modifying enzyme may be, for example, Slr0688 when the parent cyanobacteria belong to the genus *Synechocystis;* may be, for example, Syn7502_03092 or Synpcc7942_1529 when the parent cyanobacteria belong to the genus *Synechococcus;* may be, for example, ANA_C20348 or Anacy_1623 when the parent cyanobacteria belong to the genus *Anabaena;* may be, for example, CsaB (access ID of NCBI: TRU80220) when the parent cyanobacteria belong to the genus *Microcystis;* may be, for example, CsaB (access ID of NCBI: WP_107667006.1) when the parent cyanobacteria belong to the genus *Cyanothece*; may be, for example, CsaB (access ID of NCBI: WP_0260795 30.1) when the parent cyanobacteria belong to the genus *Spirulina*; may be, for example, CsaB (access ID of NCBI: WP_096658142.1) when the parent cyanobacteria belong to the genus *Calothrix;* may be, for example, CsaB (access ID of NCBI: WP_099068528.1) when the parent cyanobacteria belong to the genus *Nostoc;* may be, for example, CsaB (access ID of NCBI: WP_012361697.1) when the parent cyanobacteria belong to the genus *Crocosphaera;* and may be, for example, CsaB (access ID of NCBI: WP_036798735) when the parent cyanobacteria belong to the genus *Pleurocapsa.*

More specifically, the cell wall-pyruvic acid modifying enzyme may be, for example, Slr0688 of *Synechocystis* sp. PCC 6803, Synpcc7942_1529 of *Synechococcus* sp. PCC 7942, or Anacy_1623 of *Anabaena cylindrica* PCC 7122. Alternatively, it may be a protein whose amino acid sequence has greater than or equal to 50% identity to the amino acid sequence of any of the cell wall-pyruvic acid modifying enzymes.

As described above, it is said that if greater than or equal to 30% of the amino acid sequence of a protein is identical, there is a high possibility that the protein has a function equivalent to that of the corresponding protein. Accordingly, the cell wall-pyruvic acid modifying enzyme whose function is suppressed may be a protein or polypeptide that has the function of catalyzing a reaction in which a covalently bound sugar chain in peptidoglycan of the cell wall is modified with pyruvic acid and that is composed of an amino acid sequence having greater than or equal to 40%, preferably greater than or equal to 50%, more preferably greater than or equal to 60%, still more preferably greater than or equal to 70%, still further more preferably greater than or equal to 80%, yet still further more preferably greater than or equal to 90% identity to the amino acid sequence of any of the foregoing cell wall-pyruvic acid modifying enzymes.

In the present specification, suppressing the function of the SLH domain-retaining outer membrane protein means suppressing the ability of the protein to bind to the cell wall, suppressing or losing transport of the protein to the outer membrane, or suppressing the ability of the protein to be embedded in the outer membrane and function.

Suppressing the function of the cell wall-pyruvic acid modifying enzyme means suppressing the function of the protein to modify the covalently bound sugar chain of the cell wall with pyruvic acid.

Means for suppressing the functions of these proteins may be any means commonly used for suppressing the functions of proteins. The means include, for example, deleting or inactivating the gene encoding the SLH domain-retaining outer membrane protein and the gene encoding the cell wall-pyruvic acid modifying enzyme, inhibiting the transcription of these genes, inhibiting the translation of the transcription product of these genes, or administering an inhibitor that specifically inhibits these proteins.

In this embodiment, in the modified cyanobacteria, a gene that expresses a protein involved in the binding between the outer membrane and the cell wall (so-called a binding-related protein) may be deleted or inactivated. As a result, in the modified cyanobacteria, the expression of the protein involved in the binding between the cell wall and the outer membrane is suppressed or the function of the protein is suppressed, and thus the binding (so-called, the amount of binding and binding force) between the cell wall and the outer membrane partially decreases. As a result, in the modified cyanobacteria, the outer membranes are more likely to be partially detached from the cell walls.

To suppress the function of at least one of the SLH domain-retaining outer membrane protein and the cell wall-pyruvic acid modifying enzyme, the transcription of at least one of the gene encoding the SLH domain-retaining outer membrane protein and the gene encoding the cell wall-pyruvic acid modifying enzyme may be suppressed.

For example, the gene encoding the SLH domain-retaining outer membrane protein may be, for example, slr1841, slr1908, or slr0042 when the parent cyanobacteria belong to the genus *Synechocystis;* may be, for example, nies970_09470 when the parent cyanobacteria belong to the genus *Synechococcus;* may be, for example, anacy_5815 or anacy_3458 when the parent cyanobacteria belong to the genus *Anabaena;* may be, for example, A0A0F6U6F8_MICAE when the parent cyanobacteria belong to the genus *Microcystis;* may be, for example, A0A3B 8XX12_9CYAN when the parent cyanobacteria belong to the genus *Cyanothece*; may be, for example, A0A1Q8ZE23_9CYAN when the parent cyanobacteria belong to the genus *Leptolyngbya*; may be, for example, A0A1Z4R6U0_9CYAN when the parent cyanobacteria belong to the genus *Calothrix;* may be, for example, A0A1C0VG86_9NOSO when the parent cyanobacteria belong to the genus *Nostoc;* may be, for example, B1WRN6_CROS5 when the parent cyanobacteria belong to the genus *Crocosphaera;* and may be, for example, K9TAE4_9CYAN when the parent cyanobacteria belong to the genus *Pleurocapsa.* The base sequences of these genes are available from the NCBI database or Cyanobase described above.

More specifically, the gene encoding the SLH domain-retaining outer membrane protein 6 may be slr1841 of *Synechocystis* sp. PCC 6803, nies970_09470 of *Synechococcus* sp. NIES-970, anacy_3458 of *Anabaena cylindrica* PCC 7122, or a gene whose base sequence has greater than or equal to 50% identity to the base sequence of any of the foregoing genes.

As described above, it is said that if greater than or equal to 30% of the amino acid sequence of a protein is identical, there is a high possibility that the protein has a function equivalent to that of the corresponding protein. Accordingly, it is considered that if greater than or equal to 30% of the base sequence of a gene encoding a protein is identical, there is a high possibility that a protein having a function equivalent to that of the corresponding protein is expressed. Therefore, the gene encoding the SLH domain-retaining outer membrane protein whose function is suppressed may be, for example, a gene encoding a protein or polypeptide that has the function of binding to a covalently bound sugar chain of the cell wall and composed of a base sequence having greater than or equal to 40%, preferably greater than or equal to 50%, more preferably greater than or equal to 60%, still more preferably greater than or equal to 70%, still further more preferably greater than or equal to 80%, yet still further more preferably greater than or equal to 90% identity to the base sequence of any of the foregoing genes encoding the SLH domain-retaining outer membrane protein.

For example, the gene encoding the cell wall-pyruvic acid modifying enzyme may be, for example, slr0688 when the parent cyanobacteria belong to the genus *Synechocystis;* may be, for example, syn7502_03092 or synpcc7942_1529 when the parent cyanobacteria belong to the genus *Synechococcus;* may be, for example, ana _C20348 or anacy_1623 when the parent cyanobacteria belong to the genus *Anabaena;* may be, for example, csaB (access ID of NCBI: TRU80220) when the parent cyanobacteria belong to the genus *Microcystis;* may be, for example, csaB (access ID of NCBI: WP_107667006.1) when the parent cyanobacteria belong to the genus *Cynahothece*; may be, for example, csaB (access ID of NCBI: WP_026079530.1) when the parent cyanobacteria belong to the genus *Spirulina*; may be, for example, csaB (access ID of NCBI: WP_096658142.1) when the parent cyanobacteria belong to the genus *Calothrix;* may be, for example, csaB (access ID of NCBI: WP_09 9068528.1) when the parent cyanobacteria belong to the genus *Nostoc;* may be, for example, csaB (access ID of NCBI: WP_012361697.1) when the parent cyanobacteria belong to the genus *Crocosphaera;* and may be, for example, csaB (access ID of NCBI: WP_036798735) when the parent cyanobacteria belong to the genus *Pleurocapsa.* The base sequences of these genes are available from the NCBI database or Cyanobase described above.

More specifically, the gene encoding the cell wall-pyruvic acid modifying enzyme may be, for example, slr0688 of *Synechocystis* sp. PCC 6803, synpcc7942_1529 of *Synechococcus* sp. PCC 7942, or anacy_1623 of *Anabaena cylindrica* PCC 7122. Alternatively, the gene may be a gene whose base sequence has greater than or equal to 50% identity to the base sequence of any of the foregoing genes.

As described above, it is considered that if greater than or equal to 30% of the base sequence of a gene encoding a protein is identical, there is a high possibility that a protein having a function equivalent to that of the corresponding protein is expressed. Accordingly, the gene encoding the cell wall-pyruvic acid modifying enzyme whose function is suppressed may be, for example, a gene encoding a protein or polypeptide that has the function of catalyzing a reaction in which a covalently bound sugar chain in peptidoglycan of the cell wall is modified with pyruvic acid and that is composed of a base sequence having greater than or equal to 40%, preferably greater than or equal to 50%, more preferably greater than or equal to 60%, still more preferably greater than or equal to 70%, still further more preferably greater than or equal to 80%, yet still further more preferably greater than or equal to 90% identity to the base sequence of any of the foregoing genes encoding the cell wall-pyruvic acid modifying enzyme.

### EXAMPLES

A method for determining outer membrane detachment in cyanobacteria and an apparatus for determining outer membrane detachment in cyanobacteria according to the present disclosure will be specifically described with reference to Example below. The present disclosure is not limited to only the following Example.

In the following Example, as a method for partially detaching outer membranes of cyanobacteria from cell walls, the expression of slr0688 gene encoding the cell wall-pyruvic acid modifying enzyme was suppressed to prepare modified cyanobacteria *Synechocystis* dCas9 slr0688_sgRNA strain (see Example 2 of PTL 1). Hereinafter, modified cyanobacteria are referred to as an outer membrane-detached strain. The cyanobacterial species used in this Example is *Synechocystis* sp. PCC 6803 (hereinafter, simply referred to as "cyanobacteria"). In the following, a *Synechocystis* dCas9 strain in which a gene encoding dCas9 was introduced into cyanobacteria was prepared (see Comparative Example of PTL 1). This *Synechocystis* dCas9 strain is referred to as a wild-type strain.

### (1) Culture of Cyanobacteria

The prepared outer membrane-detached strain (*Synechocystis* dCas9 slr0688_sgRNA strain) and the wild-type strain (*Synechocystis* dCas9 strain) were each inoculated into BG-11 medium (see Table 1) containing 1 µg/mL of anhydrotetracycline (aTC) such that the initial bacterial cell concentration OD₇₃₀ = 0.1. To a 125 mL Erlenmeyer flask, 12 mL of the culture solution was dispensed and shake-cultured for three days under the condition of light irradiation with a light quantity of 100 µmol/m²/s at 30°C.

**[Table 1]**

| Component | Content (mg/L) |
|---|---|
| EDTA-Na | 1 |
| Ammonium Iron Citrate | 6 |
| NaNO₃ | 1500 |
| MgSO₄ | 75 |
| K₂HPO₄ | 39 |
| CaCl₂ | 28.6 |
| H₃BO₄ | 2.8 |
| MnCl₂ | 1.8 |
| ZnSO₄ | 0.2 |
| CuSO₄ | 0.08 |
| Na₂MoO₄ | 0.02 |
| Co(NO₃)₂ | 0.005 |
| TES-KOH (pH 7.5) | 4580 |

### (2) Fluorescence Measurement of Culture Supernatant of Cyanobacteria

### (2-1) With Regard to Culture Supernatant of Outer Membrane-Detached Strain

The culture solution of the outer membrane-detached strain obtained on day 3 of culture was subjected to centrifugal separation at room temperature at 2,500 g for 10 minutes, and the resulting culture supernatant was filtered with Millex-GV Syringe Filter Unit, 0.22 µm (Millipore). The filtered supernatant (200 µl) was added to 1,800 µl of BG-11 medium to be diluted 10-fold, and the diluted supernatant was placed in a quartz spectroscopic cell and provided for fluorescence measurement. For the fluorescence measurement, an FP-8500 spectrofluorometer (manufactured by JASCO Corporation) was used, excitation light was applied in a wavelength range of 260 to 735 nm in units of 5 nm, and the fluorescence intensity upon irradiation with the excitation light at each wavelength was recorded in a wavelength range of 275 to 750 nm.

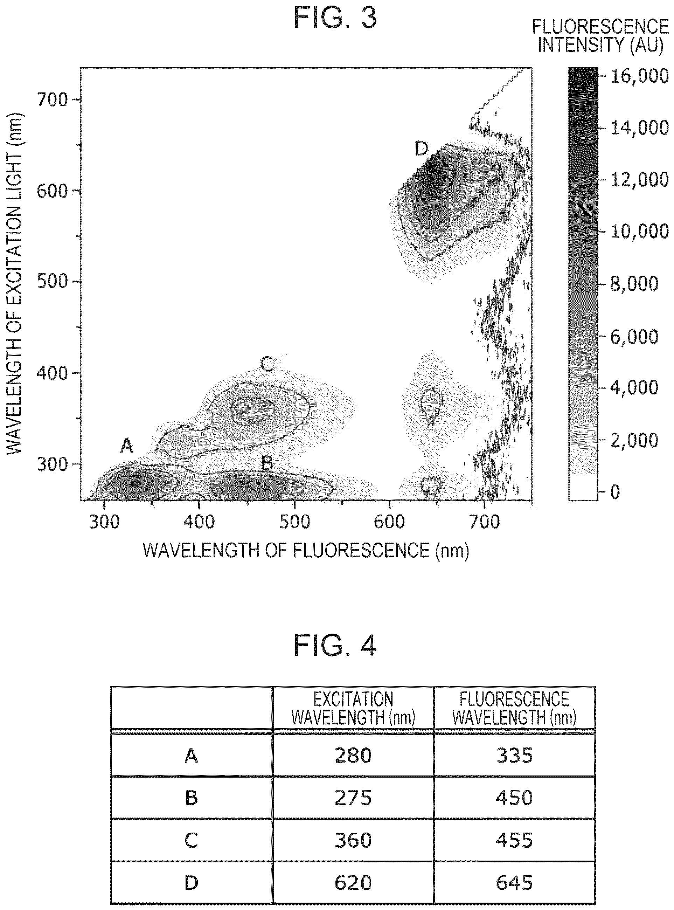

The measurement results are shown in Fig. 3. Fig. 3 is a map showing the results of fluorescence measurement of the culture supernatant of the outer membrane-detached strain. In Fig. 3, the vertical axis represents the wavelength (nm) of the excitation light, and the horizontal axis represents the wavelength (nm) of fluorescence. The fluorescence intensity is colored so that the higher the fluorescence intensity, the closer the color is to black, and the lower the fluorescence intensity, the closer the color is to white. The measurement was performed three times, and representative data among the three measurements is shown. Fig. 4 is a table showing combinations of the wavelength of the excitation light applied to the culture supernatant and fluorescence with a measured wavelength.

As shown in Fig. 3, when the culture supernatant of the outer membrane-detached strain *Synechocystis* dCas9 slr0688_sgRNA strain was irradiated with excitation light in the wavelength ranges described in (A) to (D) below, fluorescence in a wavelength range corresponding to the excitation light in each wavelength range was measured.
(A) Wavelength range of excitation light 280 ± 10 nm, Wavelength range of fluorescence 335 ± 10 nm
(B) Wavelength range of excitation light 275 ± 10 nm, Wavelength range of fluorescence 450 ± 10 nm
(C) Wavelength range of excitation light 360 ± 10 nm, Wavelength range of fluorescence 455 ± 10 nm
(D) Wavelength range of excitation light 620 ± 10 nm, Wavelength range of fluorescence 645 ± 10 nm

### (2-2) With Regard to Culture Supernatant of Wild-Type Strain

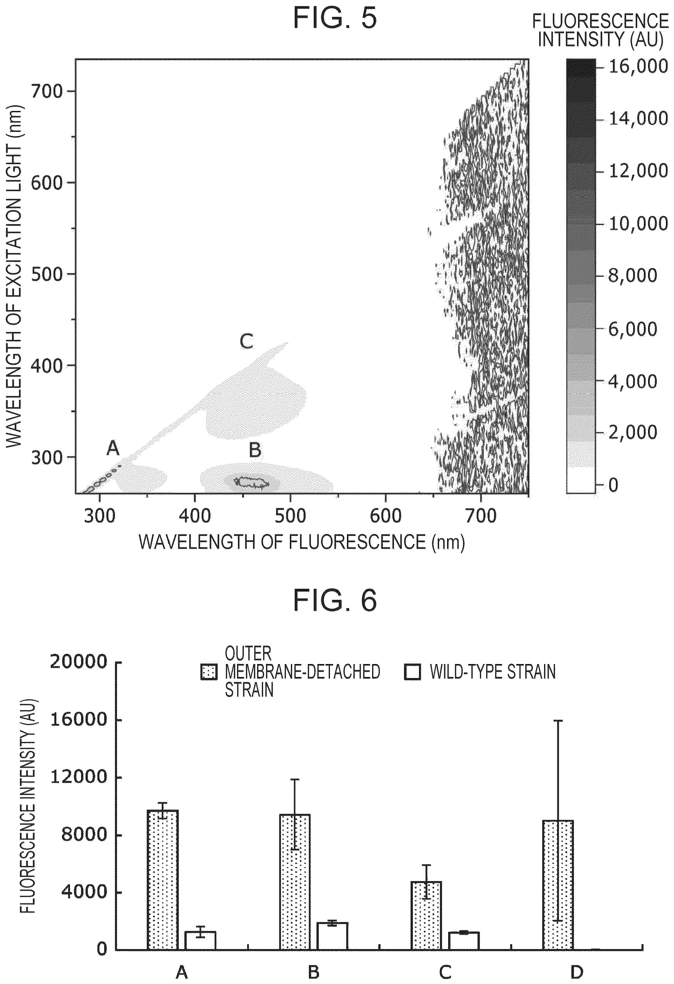

The measurement was performed as in (2-1) above except that the culture solution of the wild-type strain obtained on day 3 of culture obtained (1) above was used. The measurement results are shown in Fig. 5. Fig. 5 is a map showing the results of fluorescence measurement of the culture supernatant of the wild-type strain.

As shown in Fig. 5, when the culture supernatant of the wild-type strain *Synechocystis* dCas9 strain was irradiated with excitation light in the wavelength ranges described in (A) to (C) below, fluorescence in a wavelength range corresponding to the excitation light in each wavelength range was measured.
(A) Wavelength range of excitation light 280 ± 10 nm, Wavelength range of fluorescence 335 ± 10 nm
(B) Wavelength range of excitation light 275 ± 10 nm, Wavelength range of fluorescence 450 ± 10 nm
(C) Wavelength range of excitation light 360 ± 10 nm, Wavelength range of fluorescence 455 ± 10 nm
(D) Wavelength range of excitation light 620 ± 10 nm, Wavelength range of fluorescence 645 ± 10 nm

However, the fluorescence intensities in (A) to (C) above were very low. Furthermore, in the case of irradiation with excitation light in the wavelength range described in (D) above, no fluorescence was measured.

### (2-3) Comparison of Measurement Results

Next, the results of the fluorescence measurement of the culture supernatant of the outer membrane-detached strain and the culture supernatant of the wild-type strain measured in (2-2) and (2-3) above are compared. Fig. 6 is a graph showing the results of fluorescence measurement of the culture supernatant of the outer membrane-detached strain and the culture supernatant of the wild-type strain. The measurement was performed three times, and the graph shows the average value ± standard deviation.

As shown in Fig. 6, when the culture supernatant of the outer membrane-detached strain was irradiated with excitation light in any of the wavelength ranges of (A) to (D) above, fluorescence in a wavelength range corresponding to each wavelength range was measured, and the fluorescence measured in each of (A) to (C) above was detected with an intensity at least three times that of the culture supernatant of the wild-type strain. With regard to (D) above, although fluorescence was measured in the culture supernatant of the outer membrane-detached strain, no fluorescence was measured in the culture supernatant of the wild-type strain. That is, in any combination of the excitation wavelength and the fluorescence wavelength in (A) to (D) above, the intensity of fluorescence measured in the culture supernatant of the wild-type strain was significantly lower than that in the culture supernatant of the outer membrane-detached strain.

### (3) Discussion

According to the results of fluorescence measurement, as shown in Fig. 6, when the culture supernatant of the outer membrane-detached strain was irradiated with excitation light in the wavelength ranges described in (A) to (C) above, fluorescence in a wavelength range corresponding to the wavelength range of the excitation light was detected with an intensity at least three times that of the culture supernatant of the wild-type strain. Accordingly, for example, in the case of (A) above, if the intensity of measured fluorescence is greater than or equal to a threshold value (for example, 1,500 AU), it is considered that outer membranes of cyanobacteria may be determined to be detached from cell walls. In the case of (B) above, if the intensity of measured fluorescence is greater than or equal to a threshold value (for example, 2,000 AU), it is considered that outer membranes of cyanobacteria may be determined to be detached from cell walls. In the case of (C) above, if the intensity of measured fluorescence is greater than or equal to a threshold value (for example, 1,500 AU), it is considered that outer membranes of cyanobacteria may be determined to be detached from cell walls.

In the case of (D) above, if fluorescence is measured for the culture supernatant of the outer membrane-detached strain, it is considered that outer membranes of cyanobacteria may be determined to be detached from cell walls.

Accordingly, it is suggested that when at least one of the four conditions described above is satisfied, outer membranes of cyanobacteria may be determined to be detached from cell walls.

The above examples of the threshold values are merely threshold values in this Example and are not limited to the examples. The threshold value of fluorescence intensity in each wavelength region may be appropriately set depending on the difference in, for example, cyanobacteria species used and culture conditions.

### (Other Embodiments)

A method for determining outer membrane detachment in cyanobacteria, an apparatus for determining outer membrane detachment in cyanobacteria, and a program according to the present disclosure have been described based on the embodiments, but the present disclosure is not limited to these embodiments. Various modifications of the embodiments that are conceivable by those skilled in the art and other embodiments obtained by combining some of the structural elements in the embodiments are also included in the scope of the present disclosure so long as they do not depart from the scope of the present disclosure.

In the above embodiments, an example has been described in which binding between outer membranes and cell membranes is weakened by reducing the total amount of a protein involved in the binding between the outer membranes and the cell walls in cyanobacteria to be greater than or equal to 30% and less than or equal to 70% of the total amount of the protein in the parent strain, thereby causing the protein produced in bacterial cells to leak to the outside of the bacterial cells; however, the present disclosure is not limited thereto. For example, the binding between the outer membranes and the cell walls may be weakened or the outer membranes may be made fragile by applying external force to cyanobacteria. Alternatively, the outer membranes may be made fragile by adding an enzyme of a chemical to a culture solution of cyanobacteria.

In the above embodiments, the determination step determines, based on a wavelength range of the measured fluorescence, whether or not outer membranes of cyanobacteria have been detached from cell walls. Alternatively, the determination step may determine whether or not a culture supernatant of cyanobacteria provided for measurement is a culture solution of cyanobacteria whose outer membranes have been detached.

The determination step may determine whether or not outer membrane detachment in cyanobacteria is appropriate based on a wavelength range of the measured fluorescence. In the determination of whether or not outer membrane detachment in cyanobacteria is appropriate, for example, the fact that outer membranes of cyanobacteria have been detached from cell walls may be determined to be appropriate, and the fact that outer membranes of cyanobacteria have not been detached from cell walls may be determined to be inappropriate. Alternatively, in the determination of whether or not outer membrane detachment in cyanobacteria is appropriate, the degree of detachment of outer membranes of cyanobacteria from cell walls may be determined to be appropriate if the fluorescence intensity is greater than or equal to a threshold value, and may be determined to be inappropriate if the fluorescence intensity is less than the threshold value. Note that the degree of detachment may be represented by a ratio of the total amount of a protein involved in binding between outer membranes and cell walls (so-called a binding-related protein) in cyanobacteria to the total amount of the protein in the parent strain (so-called parent cyanobacteria). A fluorescence intensity corresponding to the degree of detachment may be calculated and set as the threshold value.

In the above embodiments, in the measurement step, fluorescence is measured upon irradiation of a culture supernatant with excitation light in a predetermined wavelength range, and, in the determination step, it is determined that outer membranes of cyanobacteria have been detached from cell walls if fluorescence is measured in a wavelength range corresponding to the predetermined wavelength range. Alternatively, in the determination step, it may be determined whether or not a culture supernatant provided for measurement is a culture solution of cyanobacteria whose outer membranes have been detached, or it may be determined whether or not outer membrane detachment in cyanobacteria is appropriate. In this case, the predetermined wavelength range of the excitation light is 620 nm ± 10 nm, and the wavelength range of fluorescence corresponding to the predetermined wavelength range of the excitation light is 645 nm ± 10 nm.

In the above embodiments, in the measurement step, fluorescence is measured upon irradiation of a culture supernatant with excitation light in a predetermined wavelength range, and in the determination step, it is determined that outer membranes of cyanobacteria have been detached if the intensity of fluorescence in a wavelength range corresponding to the predetermined wavelength range is greater than or equal to a threshold value. Alternatively, in the determination step, it may be determined whether or not a culture supernatant provided for measurement is a culture solution of cyanobacteria whose outer membranes have been detached, or it may be determined whether or not outer membrane detachment in cyanobacteria is appropriate. In this case, in the determination step, if the combination of the predetermined wavelength range of the excitation light and a wavelength range of fluorescence corresponding to the predetermined wavelength range of the excitation light is at least one of (1) to (3) below, it is determined that the outer membranes of cyanobacteria have been detached from the cell walls. Alternatively, in the determination step, it may be determined whether or not a culture supernatant provided for measurement is a culture solution of cyanobacteria whose outer membranes have been detached, or it may be determined whether or not outer membrane detachment in cyanobacteria is appropriate.
(1) Wavelength range of excitation light: 280 nm ± 10 nm, Wavelength range of fluorescence: 335 nm ± 10 nm
(2) Wavelength range of excitation light: 275 nm ± 10 nm, Wavelength range of fluorescence: 450 nm ± 10 nm
(3) Wavelength range of excitation light: 360 nm ± 10 nm, Wavelength range of fluorescence: 455 nm ± 10 nm

In the above embodiments, the determiner 122 of the determination apparatus 100 for outer membrane detachment in cyanobacteria determines, based on the wavelength range of fluorescence measured by the measurer 110, whether or not outer membranes of cyanobacteria haven been detached from cell walls. Alternatively, the determiner 122 may determine whether or not a culture supernatant of cyanobacteria provided for measurement is a culture supernatant of cyanobacteria whose outer membranes have been detached from cell walls, or may determine whether or not outer membrane detachment in cyanobacteria is appropriate.

In the above embodiments, the program is a program for causing a computer to execute a method for determining, based on a wavelength range of fluorescence measured upon irradiation of a culture supernatant of cyanobacteria with excitation light, whether or not outer membranes of the cyanobacteria have been detached from cell walls. Alternatively, the program may be a program for causing a computer to execute a method for determining, based on a wavelength range of fluorescence measured upon irradiation of a culture supernatant of cyanobacteria with excitation light, whether or not a culture supernatant provided for measurement is a culture supernatant of cyanobacteria whose outer membranes have been detached from cell walls, or may be a program for causing a computer to execute a method for determining, based on a wavelength range of fluorescence measured upon irradiation of a culture supernatant of cyanobacteria with excitation light, whether or not outer membrane detachment in the cyanobacteria is appropriate.

### (Others)

An aspect of the present disclosure may be a method described below.

A method including:
irradiating a culture supernatant with excitation light, measuring fluorescence based on the irradiation; and
determining, based on the measured fluorescence, whether or not one or more outer membranes and one or more cell walls are separated from each other in one or more cyanobacteria contained in the culture supernatant,
wherein an intensity of the excitation light for a first wavelength range is greater than or equal to a first intensity, and
an intensity of the fluorescence for a second wavelength range is greater than or equal to a second intensity.

The first wavelength range may be 620 nm ± 10 nm, and the second wavelength range may be 645 nm ± 10 nm. The first wavelength range may be 280 nm ± 10 nm, and the second wavelength range may be 335 nm ± 10 nm. The first wavelength range may be 275 nm ± 10 nm, and the second wavelength range may be 450 nm ± 10 nm. The first wavelength range may be 360 nm ± 10 nm, and the second wavelength range may be 455 nm ± 10 nm.

An aspect of the present disclosure may be an apparatus described below.

An apparatus including:
a measurer that irradiates a culture supernatant with excitation light and measures fluorescence based on the irradiation; and
a determiner that determines whether or not outer membranes of cyanobacteria contained in the culture supernatant have been detached from cell walls of the cyanobacteria based on the measured fluorescence,
wherein an intensity of the excitation light for a first wavelength range is greater than or equal to a first intensity, and
an intensity of the fluorescence for a second wavelength range is greater than or equal to a second intensity.

The first wavelength range may be 280 nm ± 10 nm, and the second wavelength range may be 335 nm ± 10 nm. The first wavelength range may be 275 nm ± 10 nm, and the second wavelength range may be 450 nm ± 10 nm. The first wavelength range may be 360 nm ± 10 nm, and the second wavelength range may be 455 nm ± 10 nm. The first wavelength range may be 620 nm ± 10 nm, and the second wavelength range may be 645 nm ± 10 nm.

The first intensity may be 1,500 AU.

### Industrial Applicability

The present disclosure can simply and easily determine whether or not outer membranes of cyanobacteria have been detached from cell walls; therefore, it is possible to quickly grasp whether or not the cyanobacteria are in a state suitable for substance production and whether or not the cyanobacteria maintain the state suitable for substance production even during a culture process.

### Reference Signs List

- 100: determination apparatus
- 110: measurer
- 120: controller
- 122: determiner
- 130: storage unit
- 140: input receiving unit
- 150: display unit

## Claims

1. A method for determining outer membrane detachment in cyanobacteria, the method comprising:
a measurement step of measuring fluorescence upon irradiation of a culture supernatant of cyanobacteria with excitation light; and
a determination step of determining, based on a wavelength range of the measured fluorescence, whether or not outer membranes of the cyanobacteria have been detached from cell walls.

2. The method for determining outer membrane detachment in cyanobacteria according to claim 1, wherein
in the measurement step, the fluorescence is measured upon irradiation of the culture supernatant with the excitation light in a predetermined wavelength range, and
in the determination step, it is determined that the outer membranes of the cyanobacteria have been detached from the cell walls if the fluorescence is measured in a wavelength range corresponding to the predetermined wavelength range.

3. The method for determining outer membrane detachment in cyanobacteria according to claim 2, wherein
the predetermined wavelength range of the excitation light is 620 nm ± 10 nm, and
the wavelength range of the fluorescence corresponding to the predetermined wavelength range of the excitation light is 645 nm ± 10 nm.

4. The method for determining outer membrane detachment in cyanobacteria according to claim 1, wherein
in the measurement step, the fluorescence is measured upon irradiation of the culture supernatant with the excitation light in a predetermined wavelength range, and
in the determination step, it is determined that the outer membranes of the cyanobacteria have been detached from the cell walls if an intensity of the fluorescence in a wavelength range corresponding to the predetermined wavelength range is greater than or equal to a threshold value.

5. The method for determining outer membrane detachment in cyanobacteria according to claim 4, wherein
in the determination step, it is determined that the outer membranes of the cyanobacteria have been detached from the cell walls if a combination of the predetermined wavelength range of the excitation light and a wavelength range of the fluorescence corresponding to the predetermined wavelength range of the excitation light is at least one of (1) to (3) below:
(1) wavelength range of excitation light: 280 nm ± 10 nm, wavelength range of fluorescence: 335 nm ± 10 nm
(2) wavelength range of excitation light: 275 nm ± 10 nm, wavelength range of fluorescence: 450 nm ± 10 nm
(3) wavelength range of excitation light: 360 nm ± 10 nm, wavelength range of fluorescence: 455 nm ± 10 nm

6. An apparatus for determining outer membrane detachment in cyanobacteria, the apparatus comprising:
a measurer that measures fluorescence upon irradiation of a culture supernatant of cyanobacteria with excitation light; and
a determiner that determines, based on a wavelength range of the fluorescence measured by the measurer, whether or not outer membranes of the cyanobacteria have been detached from cell walls.

7. A program for causing a computer to execute a method for determining, based on a wavelength range of fluorescence measured upon irradiation of a culture supernatant of cyanobacteria with excitation light, whether or not outer membranes of the cyanobacteria have been detached from cell walls.

8. A method for determining outer membrane detachment in cyanobacteria, the method comprising:
a determination step of determining, based on a wavelength range of fluorescence measured upon irradiation of a culture supernatant of cyanobacteria with excitation light, whether or not outer membranes of the cyanobacteria have been detached from cell walls.
